# EUROPEAN PATENT SPECIFICATION

(11) **EP 1 889 410 B1**
(45) Date of publication and mention of the grant of the patent: **01.10.2008**
(21) Application number: 05743334.4
(22) Date of filing: 30.05.2005
(51) Int. Cl.: H04L 12/56, H04L 1/16, H04L 1/18

(54) **DATA UNIT RELAY DEVICE AND METHOD OF CONTROLLING THE SAME**
DATENEINHEIT-RELAYEINRICHTUNG UND VERFAHREN ZU IHRER STEUERUNG
DISPOSITIF DE RELAIS D'UNITE DE DONNEES ET PROCEDE DE COMMANDE

(43) Date of publication of application: 20.02.2008
(73) Proprietor: Telefonaktiebolaget LM Ericsson (publ), 164 83 Stockholm (SE)
(72) Inventor: WIEMANN, Henning, 52062 Aachen (DE); EKSTRÖM, Hannes, S-112 61 Stockholm (SE); MILDH, Gunnar, S-164 41 Kista (SE)
(74) Representative: Tonscheidt, Andreas
(86) International application number: PCT/EP2005/005791
(87) International publication number: WO 2006/128478

(56) References cited:
- BURDETT, DAVID: "RE: Different Levels of Reliable Messaging - Intermediaries" W3C PUBLIC MAILING LIST ARCHIVES, 12 December 2002 (2002-12-12), XP002358784 Retrieved from the Internet: URL:http://lists.w3.org/Archives/Public/ww w-ws-arch/2002Dec/0095.html>
- FEI PENG ET AL: "An effective way to improve TCP performance in wireless/mobile networks" EUROCOMM 2000. INFORMATION SYSTEMS FOR ENHANCED PUBLIC SAFETY AND SECURITY. IEEE/AFCEA 17 MAY 2000, PISCATAWAY, NJ, USA,IEEE, 2000, pages 250-255, XP010515078 ISBN: 0-7803-6323-X
- JIANHUA H ET AL: "ANALYSIS OF A NEW BROADCAST PROTOCOL FOR SATELLITE COMMUNICATIONS" IEEE COMMUNICATIONS LETTERS, IEEE SERVICE CENTER, PISCATAWAY, NJ, US, vol. 4, no. 12, 1 December 2000 (2000-12-01), pages 423-425, XP001006765 ISSN: 1089-7798
- BAKSHI B S ET AL: "Improving performance of TCP over wireless networks" DISTRIBUTED COMPUTING SYSTEMS, 1997., PROCEEDINGS OF THE 17TH INTERNATIONAL CONFERENCE ON BALTIMORE, MD, USA 27-30 MAY 1997, LOS ALAMITOS, CA, USA,IEEE COMPUT. SOC, US, 27 May 1997 (1997-05-27), pages 365-373, XP010229371 ISBN: 0-8186-7813-5

## Description

### [Field of the invention]

The present invention relates to the field of data unit communication, and more specifically to an improved way of controlling a data unit relay device that acts as a relay peer of a protocol that provides for communication via a relay peer from a source peer to a destination peer.

### [Background of the invention]

Document WO 2006 024320 describes a new concept for communicating data units from a sender to a receiver via one or more relay nodes. In accordance with this novel concept, there is a single logical connection between the sender and receiver via the relay nodes, using a protocol that provides for a connection from a source peer via one or more relay peers to a destination peer. Each relay peer and the destination peer of the protocol is arranged for sending feedback messages that carry information on the receipt of protocol data units. There are at least two types of receipt information, where a first type is indicative of a correct receipt at a relay peer, and a second type is indicative of a correct receipt at the destination peer. The source peer and the relay peers perform retransmission control.based on received feedback information. Such a protocol will also be referred to as a relay ARQ protocol.

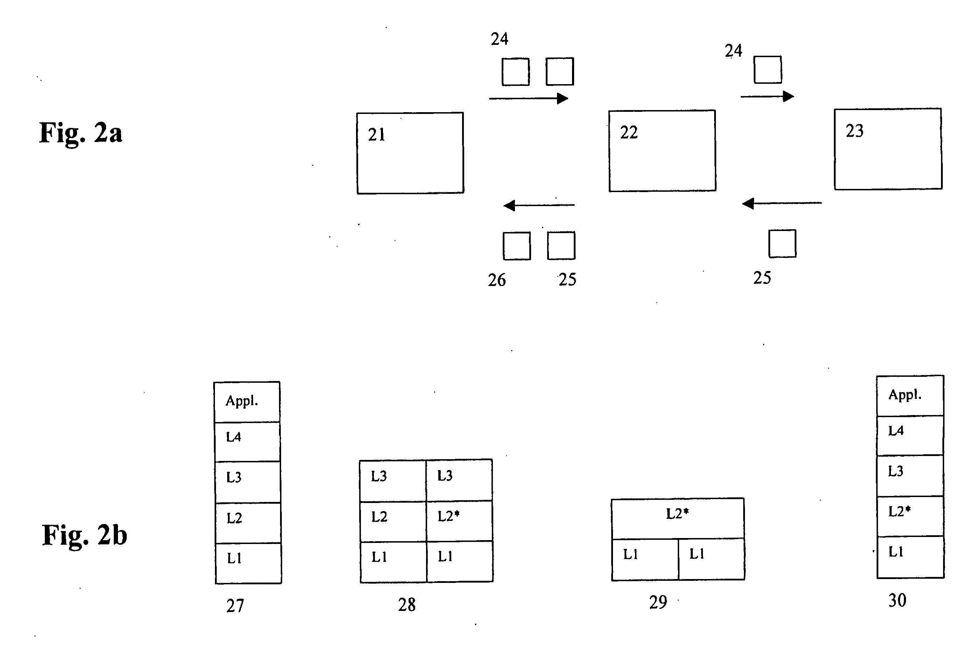

This concept is exemplified in Fig. 2a, which shows a source peer 21, a relay peer 22 and a destination peer 23. One relay peer is shown as an example, but the communication could also involve a plurality. The source peer 21 sends data units 24 to the relay peer 22, and the relay peer 22 forwards data units 24 to the destination peer 23. The relay peer 22 sends messages 26 containing the first type of receipt information, which may also be referred to as a Relay ACKnowledgement (RACK), to indicate that a data unit 24 has been correctly received at the relay peer. The destination peer 23 sends messages 25 containing the second type of receipt information, which can also be referred to as an ACKnowledgment (ACK), to indicate correct receipt at the destination peer 23. The relay peer is arranged to forward the ACK messages 25 to the source peer 21. The source peer 21 can thereby keep track of which data units have been successfully received at the destination and which have only been successfully received at a relay point. The flow control, and more specifically, the retransmission control performed by the source peer 21 is then based on the status indicated by the feedback information. If a data units has been successfully received at a relay peer, but not yet at the destination peer, then the source peer 21 can delegate responsibility of conveying the data unit to the destination onto the relay peer, but the source peer nonetheless retains a given data unit in its retransmission buffer until it has received the acknowledgment from the destination peer, such that if any problems occur in the path of one or more relay peers, a retransmission from the source is possible. After having received the second type receipt information, the source peer deletes the ACKed data unit from its retransmission buffer.

Therefore, the novel concept of a relay ARQ protocol is to establish a single connection in which a common state is shared between the source and destination and all relay nodes. The protocol state maintained at a relay peer is a soft state, which allows relay nodes to seamlessly leave and join without breaking the overall relay ARQ connection. Based on the fact that the source peer only temporarily delegates the retransmission responsibility to the relay peers, but retains the ultimate responsibility for successful delivery to the destination peer, the concept of a relay ARQ provides high reliability between the source and destination, while at the same time providing high.performance and resource efficiency.

It is noted that a source and destination peer of a relay ARQ protocol do not necessarily have to be in physical endpoints of a communication. They are simply the logical endpoints of a protocol connection, as shown in the example of Fig. 2b. Namely, in the example of Fig. 2b the relay ARQ protocol is established on the link layer L2 between a network access point 28 (e.g. a gateway to a telephone network) and a terminal 30 (e.g. a telephone terminal) via a relay node 29 (e.g. a router). The relay ARQ protocol connection is indicated by L2*. However, the access point 28 is not the physical endpoint of the overall connection. Namely, the L2* connection is part of a larger communication between a sending host 27 (e.g. an Internet server) and the terminal 30. As shown in Fig. 2b, the physical endpoints 27 and 30 are peers of a suitable L4 transport layer protocol (e.g. TCP). The L2* relay ARQ connection established between access point 28 and terminal 30 processes L3 network layer data units (e.g. IP data units) containing the L4 data units.

The document "Different Levels of Reliable Messaging-Intermediaires", XP002358784 contains additional details regarding end-to-end and intermediate acknowledgements.

### [Object of the invention]

It is the object of the present invention to improve the above-described relay ARQ concept.

### [Summary of the invention]

The above object is achieved by the subject-matter described in the independent claims of the present application. Advantageous embodiments are described in the dependent claims.

In the present invention, the inventors have contemplated the providing of a procedure for deliberately dropping data units at a data unit relay device under one or more predetermined conditions. There can be several reasons for deliberately discarding or dropping data units at a relay node such as the node 29 shown in Fig. 2b. For example, Active Queue Management (AQM) might be implemented. In active queue management the discarding of a data unit is used as an implicit signal to a sender that there is congestion in the network. This is well known for IP. In response to detection of such a signal, a sender should reduce its send rate. For example in response to detecting a data unit loss, a TCP sender reduces its send rate by 50%. AQM is a technique whereby a node in a network actively and deliberately discards data units according to a predefined algorithm, in order to ensure lower congestion levels. Expressed differently, AQM is used to prevent uncontrolled buffer overflow by duly dropping data units deliberately, such that the sender will duly reduce its send rate before the buffer at the relay node overflows.

A typical AQM condition is to monitor the length of the queue in the buffer, and to perform a deliberate discarding or dropping of one or more data units if the queue length exceeds a predetermined threshold length, said threshold length being shorter than the length at which the buffer overflows. Such an AQM condition is one example of a condition under which a data unit may be deliberately dropped or discarded at a relay node.

Another example for intentional or deliberate dropping is to discard belated data units. For example, the UMTS (Universal Mobile Telephone System) standard defines several quality of service (QoS) classes for data unit data traffic. These QoS classes are defined by various QoS parameters, e.g. maximum bit rate, guaranteed bit rate and maximum delay. If a node in the network can determine that the network cannot provide timely delivery of a data unit, e.g. because the delay added by the network will exceed the maximum delay, it may be better to discard the data unit than to waste resources transmitting it. In this case, the node may discard the data units.

As a consequence, monitoring a specific QoS related condition such as expected delay of a data unit, and comparing to an appropriate threshold is another example of a condition under which a deliberate or intentional discarding of data units can occur.

In accordance with the present invention, the relay peer of the relay ARQ protocol is arranged to conduct a procedure for indicating to the source peer and the destination peer of the relay ARQ protocol that a data unit has been deliberately dropped, and for identifying the deliberately dropped data unit.

The source peer of the relay ARQ protocol then conducts its retransmission control procedure to react to the indication as if the deliberately dropped data unit had been correctly received at the destination peer.

The destination peer is arranged to conduct a receiving control procedure in such a way as to react to the indication as if the deliberately dropped data unit had been correctly received at the destination peer.

The indication therefore has the purpose to control the source and destination peer such that the overall retransmission control for the dropped data unit is as if it had been successfully received at the destination peer. Thereby, the dropped data unit is not retransmitted.

In this way, it is avoided that the source peer attempts to retransmit a data unit that has been deliberately and intentionally dropped by the relay peer. A retransmission would completely offset the purpose of the deliberate data unit discarding performed by the relay peer. As a result, the present invention proposes a type of selective retransmission suppression in a relay ARQ transmission, if a relay peer intentionally drops one or more data units.

Expressed somewhat differently, if one takes the configuration of Fig. 2b as an example and assumes that the L2* relay peer in relay node 29 performs AQM, then the purpose of dropping one or more data units would be to make the L4 transmission control peer in sending host 27 reduce its sending rate. However, if the L2* source peer in access point 28 would attempt to retransmit the dropped data unit (e.g. because it never receives a corresponding ACK from terminal 39) then the purpose of making the L4 sending peer reduce its data rate would not be achieved. Equally, in the example of dropping delayed data units, it is not desirable that the source peer attempts to retransmit the delayed data unit, because this would waste network resources.

Therefore, the present invention proposes to implement the relay ARQ protocol in such a way that a relay peer which is capable of deliberately dropping data units will inform the source peer and destination peer of the relay ARQ protocol of which data units have been deliberately dropped, and the source peer and destination peer of the relay ARQ protocol will react to this indication by treating the deliberately dropped data unit as if it had been correctly received at the destination peer.

### [Brief description of figures]

The above concepts and advantages will become more readily understandable from the following description of detailed embodiments, which do not intend to limit the invention but only explain it better, and from the enclosed figures, in which
- Fig. 1: is a flowchart showing a method embodiment of the present invention in a relay peer of a relay ARQ. protocol;
- Figs. 2a and 2b: show a source peer, relay peer and destination peer to which the present invention can be applied; and
- Fig. 3: shows a schematic block diagram of a data unit sending device, data unit relay device or data unit receiving device in which the present invention can be implemented.

### [Detailed description of embodiments]

As already mentioned above, the present invention generally relates to data unit communication in a hierarchy of protocol layers. The relay ARQ protocol divides the data to be sent into a sequence of data units, and each data unit is associated with a sequence position identifier that identifies a position in the sequence. Such sequence position identifiers can e.g. be a simple sequence number or can be a bit or byte counter that indicates the highest bit or byte of an overall stream that is contained in the payload portion of the data unit. The latter is e.g. known from TCP/IP, such that a further discussion is not necessary here.

It is noted that such data units carry a variety of names in the context of different communication systems and communication protocols, such as packets, frames, segments, protocol data units, etc. The term "data unit" as used in the patent specification and claims generically refers to any such division of a data amount.

The present invention relates to an improvement of the relay ARQ mechanism described above. As a consequence, the complete description of the previous section "background of the invention" and "summary of the invention" is incorporated by reference into the disclosure of the present invention.

One embodiment of the present invention relates to a method of controlling a data unit relay device that is arranged to act as a relay peer of a relay ARQ protocol. In other words, the protocol provides for communicating data units from a source peer of the protocol via at least one relay peer of the protocol to a destination peer of the protocol. Each relay peer and the destination peer of the protocol are arranged for sending feedback messages carrying information on a receipt of the data units. Sequence position identifiers are used for identifying the respective data units. It is noted that the feedback messages may explicitly refer to individual data units by including the respective sequence position identifier, or may make implicit reference, e.g. by indicating the sequence position identifier of the last data unit correctly received in sequence, such that duplicate feedback messages referring to such a last correctly received data unit in sequence indicate that the next data unit in the sequence was not received.

As already mentioned, the relay ARQ protocol provides for at least two types of receipt information, a first type being indicative of a correct receipt at a relay peer of the protocol, and a second type being indicative of a correct receipt at a destination peer of the protocol. The source peer is arranged to perform retransmission control for the data units based on the received feedback information.

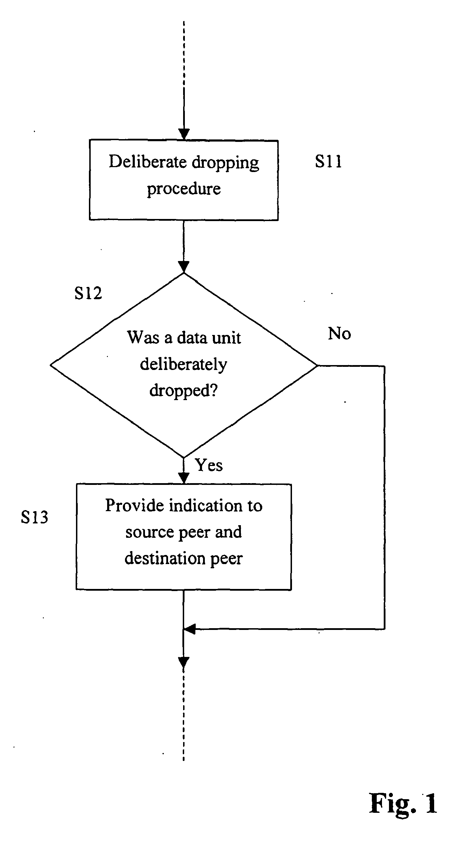

In Fig. 1, procedures in an overall control method of a data unit relay device are shown. The procedures are part of a larger control method, which is indicated by the dotted lines at the top and bottom of the figure and which is not shown for simplicity and because it is not important for the present invention. The embodiment of Fig. 1 has a procedure S11 for deliberately or intentionally dropping data units of the relay ARQ-protocol at the data unit relay device under one or more predetermined conditions. As specified earlier such predetermined conditions can e.g. be an active queue management condition or a condition for discarding belated data units. Naturally, these are only examples, and the conditions for deliberately dropping data units can be chosen in any suitable or desirable way.

The method of Fig. 1 furthermore contains a step S12 for determining whether the procedure S11 deliberately dropped a data unit. If this is the case, then a procedure S13 is performed for indicating to the source peer and the destination peer that a data unit of the relay ARQ protocol has been deliberately dropped and for identifying the deliberately dropped data unit. On the other hand, if the outcome of step S12 is negative, i.e. no data unit was deliberately dropped, then procedure S13 is skipped.

Naturally, the example of Fig. 1 also extends to the possibility of dropping a plurality of data units and appropriately indicating this to the source peer and destination peer.

It is noted that the way of indicating to the source peer and destination peer can be chosen in any suitable or desirable way. For example, it can be done indirectly or negatively, e.g. by not providing certain signalling that is normally provided. On the other hand, it is also possible to indicate directly or positively e.g. with explicit signalling.

Any direct or indirect indication is suitable if it is such that the source and destination peer can be brought to perform retransmission control for the dropped data unit as if it had been successfully received at the destination peer.

According to a preferred embodiment, the procedure S13 for indicating that a data unit has been deliberately dropped comprises sending a dedicated control signal. Preferably, the dedicated control signal comprises the sequence position identifier of the deliberately dropped data unit.

The dedicated control signal can be chosen in any suitable or desirable way. For example, for providing an indication to the destination peer, the procedure S13 can be arranged such that the dedicated control signal is generated by modifying the deliberately dropped data unit. A discard indication is added to the deliberately dropped data unit and the payload section is removed. The modified data unit is then sent as a control signal. The discard indication can be any suitable marking added to the header of the dropped data unit. For example, a specified bit in the data unit header can be defined as a discarded-data-unit bit. When the relay peer discards a data unit, it sets the discarded-data-unit bit to a specified value, leaves the sequence position identifier unchanged and only forwards the header, i.e. strips the payload section.

The destination peer is then arranged such that following the reception of a data unit carrying the discarded-data-unit bit, it reports that the discarded data unit has been successfully received. It should preferably also adapt its flow control accordingly. If the relay ARQ protocol e.g. uses window-based flow control, then the destination peer could also move the left window edge of its receive window past the sequence position identifier of the discarded data unit once all data units with lower sequence position identifiers have been either correctly received or indicated as having been discarded.

The dedicated control signal could also be a dedicated control data unit of the relay ARQ protocol. In other words, if the protocol provides for explicit control data units that are different from the data units used for transmitting send data from the source peer to the destination peer, then, in accordance with an embodiment of the invention, one such control data unit can be defined as a discarded-data-unit control data unit. Such a control data unit preferably comprises the sequence position identifier of the discarded data unit, and once the relay peer has discarded a data unit, a discarded-data-unit control data unit is sent to one or both of the source peer and the destination peer.

The destination peer should then preferably react just as previously described with respect to the modified data unit with the discarded-data-unit marking, such that a repeated description is not necessary.

According to a further embodiment, when providing an indication to the destination peer, the procedure S13 for indicating that a data unit has been deliberately dropped may comprise adding information to a data unit that is sent after the deliberately dropped data unit. For example, the header of the next data unit may be extended, notifying the destination about the dropping or discarding of one or more intermediate data units. As an example, sequence position identifiers 3, 4, 5, 6 are discarded and sequence position identifier 7 is sent. Then the header of the data unit with sequence position identifier 7 could be extended by additional information that the data units with sequence position identifier 3, 4, 5, 6 have been discarded. This has the advantage of saving network transmission resources.

According to another embodiment, the indication can be provided by introducing a third type of receipt information that indicates a deliberate dropping of a data unit at a relay peer. Such an information may also be referred to as a Dropped Packet ACKnowledgement (DPACK). Then, for providing the indication of a dropped data unit to the source peer, the procedure S13 comprises sending the third type receipt information to the source peer. For example, this third type of receipt information DPACK can be sent in the same type of feedback message used for the first and second type of receipt information.

The source peer can then erase the dropped data unit from its retransmission buffer, i.e. act as if the data unit had been correctly received at the destination peer. In a window-based flow control scheme, the source peer preferably waits until it receives the second type receipt information (NACK) from the destination peer before.incrementing the send window.

The advantage of this approach is that the source peer immediately knows when a data unit has been discarded. This information can be used to optimise both retransmission and overall flow control.

According to a further embodiment, for providing an indication to the source peer, the procedure S13 may comprise sending the second type receipt information (ACK) to the source peer. As already indicated previously, the source peer of the relay ARQ protocol is arranged to retain a data unit until it receives the second type receipt information, and will erase it after having received this information. As a consequence, the sending of the second type receipt information by the relay peer can serve as an indication for a dropping of the data unit and causing the source peer to remove the data unit in question from its retransmission buffer and to treat the data unit as correctly received by the destination peer.

According to a further embodiment, as a means for the relay peer to give an indication to the source peer, it is possible that the relay peer simply waits until its message to the destination peer has caused a second type receipt information (ACK) to have been issued by the destination peer, and this second type receipt information having been received by.the relay peer. The relay peer then simply forwards the second type receipt information to the source peer. Accordingly, as the relay ARQ protocol source peer is arranged to take the receipt of the second type receipt information as indicating that the data unit has been correctly received at the destination peer, the source peer will react accordingly and erase the dropped data unit from its retransmission buffer. It is noted that in connection with such an embodiment, in which the relay peer waits to receive a second type receipt information from the destination peer, it is preferable to arrange the source peer to either have no retransmission time-out feature, or to adjust the retransmission time-out period accordingly, such that a time-out due to the relay peer's waiting is improbable. In other words, the retransmission time-out period should be set sufficiently higher than the average time required for the relay peer to wait for the second type receipt information from the destination peer and for forwarding this information to the source peer.

The above-described embodiments of the present invention can be put to practice in any suitable or desirable way, by means of hardware, software or any combination of hardware and software. The present invention can specifically embodied as a computer program product comprising a computer program for executing one or more of the above-described method embodiments when loaded into and run on a programmable data unit processing device.

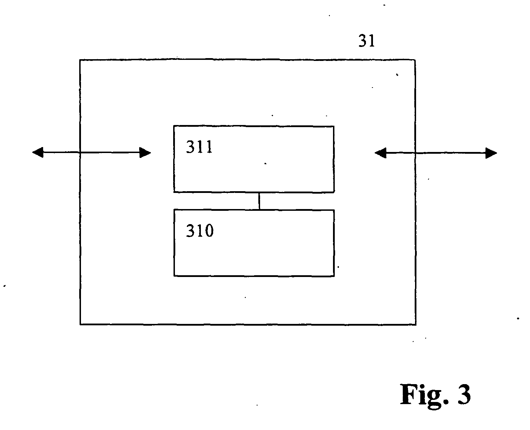

An example of a data unit relay device of the present invention is shown in Fig. 3. The data unit relay device 31 comprises a processor 310 and a.buffer memory 311. The data unit relay device 31 is appropriately arranged to receive and transmit data units of a relay ARQ protocol and to receive and transmit feedback messages of the relay ARQ protocol. The processor is implemented to conduct the above-described control methods, such that a repeated description of these is not necessary. It is.noted that the term "processor" is to be understood generically as relating to any suitable device for performing the processing necessary for conducting the method. However, it is preferred that the processor is a programmable processor and that the method steps can be implemented by appropriate computer code loaded into the programmable processor.

The example of Fig. 3 does not show further conventional elements of a data unit relay device, such as connectors etc., as these elements are well-known and therefore do not need to be described further.

As already indicated previously in the description of the method for controlling a data unit relay device, the present invention can also be embodied in a method for controlling a data unit sending device, a corresponding data unit sending device, and in a method for controlling a data unit sending device and a corresponding data unit sending device.

In the embodiment of a method for controlling a data unit sending device, the data unit sending device is arranged to act as a source peer of the relay ARQ protocol. The procedure is provided for conducting a retransmission control procedure for controlling a retransmission of the data units of the relay ARQ protocol based on received feedback information. Furthermore, a procedure for receiving an indication that a data unit of the relay ARQ has been deliberately dropped at a relay peer and for identifying the deliberately dropped data unit is provided. Finally, the data unit sending device control method furthermore comprises conducting the retransmission control procedure in such a way that it reacts to the indication of a dropped data unit as if the deliberately dropped data unit had been correctly received at the destination peer of the relay ARQ protocol. In other words, the dropped data unit can be removed from the retransmission buffer of the data unit sending device.

A data unit sending device of the invention can have the same structure as shown in Fig. 3, i.e. a processor and a buffer, where the processor is adapted to conduct the above-described control method.

According to a further embodiment of the invention, a method of controlling a data unit receiving device as a destination peer of the relay ARQ protocol is provided. The control method comprises a receipt control procedure for controlling a receipt of data units of the relay ARQ protocol and for conducting a receipt response. The receipt response comprises sending appropriate feedback messages, e.g. a feedback message containing the second type receipt information (ACK) when correctly receiving a data unit.

The control method furthermore comprises a procedure for receiving an indication that a data unit of the relay ARQ protocol has been deliberately dropped at a relay peer, and for identifying the deliberately dropped data unit. This procedure is arranged to e.g. interpret one or more of the above-mentioned indications provided by the data unit relay peer.

Finally, the control method for the data unit receiving device is arranged to conduct the receipt control procedure to react to the indication from the relay peer as if the deliberately dropped data unit had been correctly received. As a consequence, the second type of receipt information (ACK) is sent when receiving the indication from the relay peer.

In the above described examples and in Fig. 2, only one relay device or relay peer is referred to. This has been done for simplicity, but the invention is by no means restricted thereto, as a relay ARQ communication may also involve a plurality of relay peers. In such an event it is preferable that a relay peer that deliberately drops data units not only provides an indication to the source and destination peers, but also to the other relay peers. Moreover, the relay peers are then preferably arranged to each be able to process the indication provided by another relay peer. In other words, the indication is appropriately forwarded towards the source peer or destination peer, depending on whether the forwarding relay peer is upstream or downstream from the relay peer that deliberately dropped a data unit. Furthermore, each relay peer is preferably arranged to adapt its own data unit management accordingly, e.g. drop the dropped data unit from its own buffer, and to process said indication by reacting at least with respect to retransmission - as if said dropped data unit had been successfully received at the destination peer.

As can be seen from the example of Fig. 2b, a relay ARQ connection, such as the L2* connection between access point 28 and terminal 30 may be located in a protocol layer that receives data units from a higher layer e.g. the L3 network layer shown in Fig. 2b. The L2* layer is then adapted to embed the L3 data units received from above before sending. The term embedding may relate to encapsulation or segmentation. In the event of encapsulation, one L3 data unit will be sent in one L2* data unit, such that there is a one-to-one correspondence. In the event of segmentation, one L3 data unit will generally be spread out over a plurality of L2* data units. In the latter case, it is preferable to embody the present invention in such a way that the relay peer (e.g. implemented in the relay node 29 of Fig. 2b) comprises a procedure for identifying a data unit of a higher layer than the predetermined relay ARQ layer to which the deliberately dropped data unit belongs, and for dropping other data units of the relay ARQ layer that belong to the identified higher layer data unit. In other words, in the example of Fig. 2b, the L2* implementation is made L3 aware, such that it can distinguish between different L3 data units. This can e.g. be done by letting the relay peer identify delimiters of L3 data units.

The advantage of this embodiment lies in the fact if one L2* data unit from an L3 data unit is dropped, then it is generally not worthwhile to transmit the remainder of the L3 data unit segmented into L2* data units, as the resulting L3 data unit is in any case defective.

In the same way, in the event that the relay ARQ protocol implementation performs segmentation of higher layer data units, it is preferably that the data unit sending device and control method for the data unit sending device are arranged such that after having received an indication and identification of a data unit deliberately dropped at a relay peer, other data units of the relay ARQ protocol belonging to the same higher layer data unit as the dropped data unit are themselves dropped. Namely, it is not worthwhile to transmit these data units. Expressed differently, these other data units are treated as if they had been correctly received at the destination peer.

Furthermore, in the event of data unit segmentation, the data unit receiving device and method of controlling a data unit receiving device are preferably arranged such that a data unit of a higher layer than the relay ARQ layer to which a deliberately dropped data unit belongs is identified, and other data units of the relay ARQ layer that belong to the same identified higher layer unit are dropped. This especially means that they are not passed on to the higher layer on the receiving side.

Although the present invention has been described by way of preferred embodiments, these are not intended to be limiting for the invention, as the invention is defined by the appended claims. Reference signs in the claims serve to make the claims easier to read, but also do not have any limiting effect.

## Claims

1. A method of controlling a data unit relay device, comprising:
a procedure for implementing a data unit communication protocol of a predetermined layer, where data to be sent is divided in said protocol into a sequence of data units, each data unit being associated with a sequence position identifier that identifies a position in said sequence, and said protocol providing for
- communicating said data units from a source peer of said protocol via at least one relay peer of said protocol to a destination peer of said protocol,
- each relay peer and destination of said protocol being arranged for sending feedback messages carrying information on a receipt of said data units of said protocol, using said sequence position identifiers,
where said protocol provides for at least a first type and a second type of receipt information, said first type of receipt information (RACK) being indicative of a correct receipt at a relay peer of said protocol, and said second type of receipt information (ACK) being indicative of a correct receipt at a destination peer of said protocol, and each source peer of said protocol being arranged to perform retransmission control for said data units based on received feedback information,
where said protocol is implemented such that said data unit relay device acts as a relay peer of said protocol,
a procedure for deliberately dropping data units of said protocol at said.data unit relay device under one or more predetermined conditions, and
a procedure for indicating to said source peer and said destination peer that a data unit of said protocol has been deliberately dropped, and for identifying said deliberately dropped data unit.

2. A method according to claim 1, comprising a procedure for identifying a data unit of a higher layer than said predetermined layer to which said deliberately dropped data unit of said protocol belongs, and for dropping other data units of said protocol that belong to said identified higher layer data unit.

3. A method according to claim 1 or 2, wherein said procedure for indicating that a data unit of said protocol has been deliberately dropped comprises sending a dedicated control signal.

4. A method according to claim 3, wherein said dedicated control signal comprises the sequence position identifier of said deliberately dropped data unit.

5. A method according to claim 4, wherein for providing an indication to said destination peer, said procedure for indicating that a data unit of said protocol has been deliberately dropped comprises generating said dedicated control signal by modifying the deliberately dropped data unit, in that a discard indication is added to the deliberately dropped data unit and a payload section is removed from the deliberately dropped data unit.

6. A method according to claim 3 or 4, wherein said dedicated control signal is a dedicated control data unit of said protocol.

7. A method according to claim 1 or 2, wherein for providing an indication to said destination peer, said procedure for indicating that a data unit of said protocol has been deliberately dropped comprises adding information to a data unit of said protocol that is sent after said deliberately dropped data unit.

8. A method according to claim 1 or 2, wherein said protocol provides for a third type of receipt information (DPACK) indicative of a deliberate dropping at a relay peer of said protocol, and where for providing an indication to said source peer, said procedure for indicating that a data unit of said protocol has been deliberately dropped comprises sending said third type receipt information (DPACK) to said source peer.

9. A method according to claim 1 or 2, wherein for providing an indication to said source peer, said procedure for indicating that a data unit of said protocol has been deliberately dropped comprises sending said second type receipt information (ACK) to said source peer.

10. A computer program product comprising a computer program for executing the method of one of claims 1 to 9 when loaded into and run on a programmable data unit relay device.

11. A data unit relay device, comprising:
a processor for implementing a data unit communication protocol of a predetermined layer, where data to be sent is divided in said protocol into a sequence of data units, each data unit being associated with a sequence position identifier that identifies a position in said sequence, and said protocol providing for
- communicating said data-units from a source peer of said protocol via at least one relay peer of said protocol to a destination peer of said protocol,
- each relay peer and destination of said protocol being arranged for sending feedback messages carrying information on a receipt of said data units of said protocol, using said sequence position identifiers,
where said protocol provides for at least a first type and a second type of receipt information, said first type of receipt information (RACK) being indicative of a correct receipt at a relay peer of said protocol, and said second type of-receipt information (ACK) being indicative of a correct receipt at a destination peer of said protocol, and each source peer of said protocol being arranged to perform retransmission control for said data units based on received feedback information,
where said protocol is implemented such that said data unit relay device acts as a relay peer of said protocol,
where said processor is arranged for deliberately dropping data units of said protocol at said data unit relay device under one or more predetermined conditions, and is furthermore arranged for indicating to said source peer and said destination peer that a data unit of said protocol has been deliberately dropped, and for identifying said deliberately dropped data unit.

12. A data unit relay device according to claim 11, wherein said processor is arranged for identifying a data unit of a higher layer than said predetermined layer to which said deliberately dropped data unit of said protocol belongs, and for dropping other data units of said protocol that belong to said identified higher layer data unit.

13. A data unit sending device, comprising:
a processor for implementing a data unit communication protocol of a predetermined layer, where data to be sent is divided in said protocol into a sequence of data units, each data unit being associated with a sequence position identifier that identifies a position in said sequence, and said protocol providing for
- communicating said data units from a source peer of said protocol via at least one relay peer of said protocol to a destination peer of said protocol,
- each relay peer and destination of said protocol being arranged for sending feedback messages carrying information on a receipt of said data units of said protocol, using said sequence position identifiers,
where said protocol provides for at least a first type and a second type of receipt information, said first type of receipt information (RACK) being indicative of a correct receipt at a relay peer of said protocol, and said second type of receipt information (ACK) being indicative of a correct receipt at a destination peer of said protocol, and each source peer of said protocol being arranged to perform retransmission control for said data units based on received feedback information,
where said protocol is implemented such that said data unit sending device acts as a source peer of said protocol,
said processor being arranged for conducting a retransmission control procedure for controlling a retransmission of said data units of said protocol based on said received feedback information, and for.receiving an indication that a data unit of said protocol has been deliberately dropped at a relay peer of said protocol, and for identifying said deliberately dropped data unit,
where said processor is arranged to conduct said retransmission control procedure to react to said indication as if said deliberately dropped data unit had been correctly received at the destination peer of said protocol.

14. A data unit sending device according to claim 13, where said processor is arranged for identifying a data unit of a higher layer than said predetermined layer to which said deliberately dropped data unit of said protocol belongs, and for dropping other data units of said protocol that belong to said identified higher layer data unit.

15. data unit receiving device, comprising:
a processor for implementing a data unit communication protocol of a predetermined layer, where data to be sent is divided in said protocol into a sequence of data units, each data unit being associated with a sequence position identifier that identifies a position in said sequence, and said protocol providing for
- communicating said data units from a source peer of said protocol via at least one relay peer of said protocol to a destination peer of said protocol,
- each relay peer and destination of said protocol being arranged for sending feedback messages carrying information on a receipt of said data units of said protocol, using said sequence position identifiers,
where said protocol provides for at least a first type and a second type of receipt information, said first type of receipt information (RACK) being indicative of a correct receipt at a relay peer of said protocol, and said second type of receipt information (ACK) being indicative of a correct receipt at a destination peer of said protocol, and each source peer of said protocol being arranged to perform retransmission control for said data units based on received feedback information, where said protocol is implemented such that said data unit receiving device acts as a destination peer of said protocol,
said processor being arranged to conduct a control procedure for controlling a receipt of said data units of said protocol and a receipt response,
said processor furthermore being arranged for receiving an indication that a data unit of said protocol has been deliberately dropped at a relay peer of said protocol, and for identifying said deliberately dropped data unit,
where said processor is arranged to conduct said control procedure to react to said indication as if said deliberately dropped data unit had been correctly received at said data unit receiving device.

16. A data unit receiving device according to claim 15,
where said processor is arranged for identifying a data unit of a higher layer than said predetermined layer to which said deliberately dropped data unit of said protocol belongs, and for dropping other data units of said protocol that belong to said identified higher layer data unit.

## Patentansprüche

1. Verfahren zur Steuerung einer Dateneinheitsweitergabevorrichtung, umfassend:
eine Prozedur zum Implementieren eines Dateneinheitsübertragungsprotokolls einer vorbestimmten Schicht,
wobei zu sendende Daten in dem Protokoll in eine Sequenz von Dateneinheiten aufgeteilt werden, jede Dateneinheit mit einer Sequenzpositionskennung assoziiert ist, die eine Position in der Sequenz identifiziert, und das Protokoll vorsieht, dass
- die Dateneinheiten von einem Ausgangspartner des Protokolls über wenigstens einen Weitergabepartner des Protokolls an einen Zielpartner des Protokolls übertragen werden,
- jeder Weitergabepartner und jedes Ziel des Protokolls so ausgelegt sind, dass sie unter Verwendung der Sequenzpositionskennungen Rückmeldungsnachrichten senden, die Information über einen Empfang der Dateneinheiten des Protokolls mitführen, wobei das Protokoll wenigstens einen ersten Typ und einen zweiten Typ von Empfangsinformation vorsieht, der erste Typ von Empfangsinformation (RACK) für einen korrekten Empfang an einem Weitergabepartner des Protokolls bezeichnend ist, und der zweite Typ von Empfangsinformation (ACK) für einen korrekten Empfang an einem Zielpartner des Protokolls bezeichnend ist, und jeder Ausgangspartner des Protokolls so ausgelegt ist, dass er eine Wiederholungssendungssteuerung für die Dateneinheiten basierend auf der empfangenen Rückmeldungsinformation durchführt, wobei das Protokoll derart implementiert ist, dass die Dateneinheitsweitergabevorrichtung als ein Weitergabepartner des Protokolls agiert,
eine Prozedur zum vorsätzlichen Verwerfen von Dateneinheiten des Protokolls unter einer oder mehr vorbestimmten Bedingungen an der Dateneinheitsweitergabevorrichtung, und
eine Prozedur, um dem Ausgangspartner und dem Zielpartner anzuzeigen, dass eine Dateneinheit des Protokolls vorsätzlich verworfen wurde, und um die vorsätzlich verworfene Dateneinheit zu identifizieren.

2. Verfahren nach Anspruch 1, umfassend eine Prozedur zum Identifizieren einer Dateneinheit einer höheren Schicht als der vorbestimmten Schicht, zu welcher die vorsätzlich verworfene Dateneinheit des Protokolls gehört, und zum Verwerfen anderer Dateneinheiten des Protokolls, die zu der identifizierten Dateneinheit der höheren Schicht gehören.

3. Verfahren nach Anspruch 1 oder 2, wobei die Prozedur zum Anzeigen, dass eine Dateneinheit des Protokolls vorsätzlich verworfen wurde, ein Senden eines dedizierten Steuersignals umfasst.

4. Verfahren nach Anspruch 3, wobei das dedizierte Steuersignal die Sequenzpositionskennung der vorsätzlich verworfenen Dateneinheit umfasst.

5. Verfahren nach Anspruch 4, wobei zum Liefern einer Anzeige an den Zielpartner die Prozedur zum Anzeigen, dass eine Dateneinheit des Protokolls vorsätzlich verworfen wurde, ein Erzeugen des dedizierten Steuersignals durch Modifizieren der vorsätzlich verworfenen Dateneinheit umfasst, insofern als eine Verwerfungsanzeige der vorsätzlich verworfenen Dateneinheit hinzugefügt wird und ein Nutzlastabschnitt aus der vorsätzlich verworfenen Dateneinheit entfernt wird.

6. Verfahren nach Anspruch 3 oder 4, wobei das dedizierte Signal eine dedizierte Steuerdateneinheit des Protokolls ist.

7. Verfahren nach Anspruch 1 oder 2, wobei zum Liefern einer Anzeige an den Zielpartner die Prozedur zum Anzeigen, dass eine Dateneinheit des Protokolls vorsätzlich verworfen wurde, ein Hinzufügen von Information zu einer Dateneinheit des Protokolls umfasst, die nach der vorsätzlich verworfenen Dateneinheit gesendet wird.

8. Verfahren nach Anspruch 1 oder, 2, wobei das Protokoll einen dritten Typ von Empfangsinformation (DPACK) vorsieht, der für ein vorsätzliches Verwerfen an einem Weitergabepartner des Protokolls bezeichnend ist, und wobei zum Liefern einer Anzeige an den Ausgangspartner die Prozedur zum Anzeigen, dass eine Dateneinheit des Protokolls vorsätzlich verworfen wurde, ein Senden der Empfangsinformation (DPACK) des dritten Typs an den Ausgangspartner umfasst.

9. Verfahren nach Anspruch 1 oder 2, wobei zum Liefern einer Anzeige an den Ausgangspartner die Prozedur zum Anzeigen, dass eine Dateneinheit des Protokolls vorsätzlich verworfen wurde, ein Senden der Empfangsinformation (ACK) des zweiten Typs an den Ausgangspartner umfasst.

10. Computerprogrammprodukt, umfassend ein Computerprogramm zum Ausführen des Verfahrens nach einem der Ansprüche 1 bis 9, wenn in eine programmierbare Dateneinheitsweitergabevorrichtung geladen und darauf ausgeführt.

11. Dateneinheitsweitergabevorrichtung, umfassend:
einen Prozessor zum Implementieren eines Dateneinheitsübertragungsprotokolls einer vorbestimmten Schicht, wobei zu sendende Daten in dem Protokoll in eine Sequenz von Dateneinheiten aufgeteilt werden, jede Dateneinheit mit einer Sequenzpositionskennung assoziiert ist, die eine Position in der Sequenz identifiziert, und das Protokoll vorsieht, dass
- die Dateneinheiten von einem Ausgangspartner des Protokolls über wenigstens einen Weitergabepartner des Protokolls an einen Zielpartner des Protokolls übertragen werden,
- jeder Weitergabepartner und jedes Ziel des Protokolls so ausgelegt sind, dass sie unter Verwendung der Sequenzpositionskennungen Rückmeldungsnachrichten senden, die Information über einen Empfang der Dateneinheiten des Protokolls mitführen, wobei das Protokoll wenigstens einen ersten Typ und einen zweiten Typ von Empfangsinformation vorsieht, der erste Typ von Empfangsinformation (RACK) für einen korrekten Empfang an einem Weitergabepartner des Protokolls bezeichnend ist, und der zweite Typ von Empfangsinformation (ACK) für einen korrekten Empfang an einem Zielpartner des Protokolls bezeichnend ist, und jeder Ausgangspartner des Protokolls so ausgelegt ist, dass er eine Wiederholungssendungssteuerung für die Dateneinheiten basierend auf der empfangenen Rückmeldungsinformation durchführt, wobei das Protokoll derart implementiert ist, dass die Dateneinheitsweitergabevorrichtung als ein Weitergabepartner des Protokolls agiert,
wobei der Prozessor zum vorsätzlichen Verwerfen von Dateneinheiten des Protokolls unter einer oder mehr vorbestimmten Bedingungen an der Dateneinheitsweitergabevorrichtung ausgelegt ist und außerdem so ausgelegt ist, dass er dem Ausgangspartner und dem Zielpartner anzeigt, dass eine Dateneinheit des Protokolls vorsätzlich verworfen wurde, und dass er die vorsätzlich verworfene Dateneinheit identifiziert.

12. Dateneinheitsweitergabevorrichtung nach Anspruch 11,
wobei der Prozessor zum Identifizieren einer Dateneinheit einer höheren Schicht als der vorbestimmten Schicht, zu welcher die vorsätzlich verworfene Dateneinheit des Protokolls gehört, und zum Verwerfen anderer Dateneinheiten des Protokolls, die zu der identifizierten Dateneinheit der höheren Schicht gehören, ausgelegt ist.

13. Dateneinheitssendevorrichtung, umfassend:
einen Prozessor zum Implementieren eines Dateneinheitsübertragungsprotokolls einer vorbestimmten Schicht, wobei zu sendende Daten in dem Protokoll in eine Sequenz von Dateneinheiten aufgeteilt werden, jede Dateneinheit mit einer Sequenzpositionskennung assoziiert ist, die eine Position in der Sequenz identifiziert, und das Protokoll vorsieht, dass
- die Dateneinheiten von einem Ausgangspartner des Protokolls über wenigstens einen Weitergabepartner des Protokolls an einen Zielpartner des Protokolls übertragen werden,
- jeder Weitergabepartner und jedes Ziel des Protokolls so ausgelegt sind, dass sie unter Verwendung der Sequenzpositionskennungen Rückmeldungsnachrichten senden, die Information über einen Empfang der Dateneinheiten des Protokolls mitführen, wobei das Protokoll wenigstens einen ersten Typ und einen zweiten Typ von Empfangsinformation vorsieht, der erste Typ von Empfangsinformation (RACK) für einen korrekten Empfang an einem Weitergabepartner des Protokolls bezeichnend ist, und der zweite Typ von Empfangsinformation (ACK) für einen korrekten Empfang an einem Zielpartner des Protokolls bezeichnend ist, und jeder Ausgangspartner des Protokolls so ausgelegt ist, dass er eine Wiederholungssendungssteuerung für die Dateneinheiten basierend auf der empfangenen Rückmeldungsinformation durchführt, wobei das Protokoll derart implementiert ist, dass die Dateneinheitssendevorrichtung als ein Ausgangspartner des Protokolls agiert,
der Prozessor zum Durchführen einer Wiederholungssendungssteuerungsprozedur zum Steuern einer Wiederholungssendung der Dateneinheiten des Protokolls basierend auf der empfangenen Rückmeldungsinformation und zum Empfangen einer Anzeige, dass eine Dateneinheit des Protokolls an einem Weitergabepartner des Protokolls vorsätzlich verworfen wurde, und zum Identifizieren der vorsätzlich verworfenen Dateneinheit ausgelegt ist,
wobei der Prozessor so ausgelegt ist, dass er die Wiederholungssendungssteuerungsprozedur so durchführt, dass er auf die Anzeige reagiert, als ob die vorsätzlich verworfene Dateneinheit am Zielpartner des Protokolls korrekt empfangen worden wäre.

14. Dateneinheitssendevorrichtung nach Anspruch 13, wobei der Prozessor zum Identifizieren einer Dateneinheit einer höheren Schicht als der vorbestimmten Schicht, zu welcher die vorsätzlich verworfene Dateneinheit des Protokolls gehört, und zum Verwerfen anderer Dateneinheiten des Protokolls, die zu der identifizierten Dateneinheit der höheren Schicht gehören, ausgelegt ist.

15. Dateneinheitsempfangsvorrichtung, umfassend:
einen Prozessor zum Implementieren eines Dateneinheitsübertragungsprotokolls einer vorbestimmten Schicht, wobei zu sendende Daten in dem Protokoll in eine Sequenz von Dateneinheiten aufgeteilt werden, jede Dateneinheit mit einer Sequenzpositionskennung assoziiert ist, die eine Position in der Sequenz identifiziert, und das Protokoll vorsieht, dass
- die Dateneinheiten von einem Ausgangspartner des Protokolls über wenigstens einen Weitergabepartner des Protokolls an einen Zielpartner des Protokolls übertragen werden,
- jeder Weitergabepartner und jedes Ziel des Protokolls so ausgelegt sind, dass sie unter Verwendung der Sequenzpositionskennungen Rückmeldungsnachrichten senden, die Information über einen Empfang der Dateneinheiten des Protokolls mitführen, wobei das Protokoll wenigstens einen ersten Typ und einen zweiten Typ von Empfangsinformation vorsieht, der erste Typ von Empfangsinformation (RACK) für einen korrekten Empfang an einem Weitergabepartner des Protokolls bezeichnend ist, und der zweite Typ von Empfangsinformation (ACK) für einen korrekten Empfang an einem Zielpartner des Protokolls bezeichnend ist, und jeder Ausgangspartner des Protokolls so ausgelegt ist, dass er eine Wiederholungssendungssteuerung für die Dateneinheiten basierend auf der empfangenen Rückmeldungsinformation durchführt, wobei das Protokoll derart implementiert ist, dass die Dateneinheitsempfangsvorrichtung als ein Zielpartner des Protokolls agiert,
der Prozessor so ausgelegt ist, dass er eine Steuerungsprozedur zum Steuern eines Empfangs der Dateneinheiten des Protokolls und einer Empfangsantwort durchführt,
der Prozessor außerdem zum Empfangen einer Anzeige, dass eine Dateneinheit des Protokolls an einem Weitergabepartner des Protokolls vorsätzlich verworfen wurde, und zum Identifizieren der vorsätzlich verworfenen Dateneinheit ausgelegt ist,
wobei der Prozessor so ausgelegt ist, dass er die Steuerungsprozedur so durchführt, dass er auf die Anzeige reagiert, als ob die vorsätzlich verworfene Dateneinheit an der Dateneinheitsempfangsvorrichtung korrekt empfangen worden wäre.

16. Dateneinheitsempfangsvorrichtung nach Anspruch 15, wobei der Prozessor zum Identifizieren einer Dateneinheit einer höheren Schicht als der vorbestimmten Schicht, zu welcher die vorsätzlich verworfene Dateneinheit des Protokolls gehört, und zum Verwerfen anderer Dateneinheiten des Protokolls, die zu der identifizierten Dateneinheit der höheren Schicht gehören, ausgelegt ist.

## Revendications

1. Procédé de commande d'un dispositif de relais d'unités de données, comprenant :
une procédure pour implémenter un protocole de communication d'unités de données d'une couche prédéterminée, où les données à envoyer sont divisées dans ledit protocole en une séquence d'unités de données, chaque unité de donnée étant associée à un identifiant de position de séquence qui identifie une position dans ladite séquence, et ledit protocole assurant
- une communication desdites unités de données d'un pair source dudit protocole via au moins un pair relais dudit protocole vers un pair de destination dudit protocole,
- chaque pair relais et de destination dudit protocole étant agencé afin d'envoyer des messages de retour d'information transportant une information concernant une réception desdites unités de données dudit protocole, en utilisant lesdits identifiants de position de séquence, où ledit protocole fournit au moins un premier type et un second type d'information de réception, ledit premier type d'information de réception (RACK) étant indicatrice d'une réception correcte au niveau d'un pair relais dudit protocole, et ledit second type d'information de réception (ACK) étant indicatrice d'une réception correcte au niveau d'un pair de destination dudit protocole, et chaque pair source dudit protocole étant agencé pour effectuer une commande de retransmission desdites unités de données sur la base de l'information de retour d'information reçue, où ledit protocole est implémenté de telle sorte que ledit dispositif de relais d'unités de données agisse comme un pair relais dudit protocole,
une procédure pour abandonner délibérément des unités de données dudit protocole au niveau dudit dispositif de relais d'unités de données à une ou plusieurs conditions prédéterminées, et
une procédure pour indiquer audit pair source et audit pair de destination qu'une unité de données dudit protocole a été délibérément abandonnée, et pour identifier ladite unité de données délibérément abandonnée.

2. Procédé selon la revendication 1, comprenant une procédure pour identifier une unité de données d'une couche supérieure à ladite couche prédéterminée à laquelle ladite unité de données délibérément abandonnée appartient, et pour abandonner d'autres unités de données dudit protocole qui appartiennent à ladite unité de données de couche supérieure identifiée.

3. Procédé selon la revendication 1 ou 2, dans lequel ladite procédure pour indiquer qu'une unité de données dudit protocole a été délibérément abandonnée comprend l'envoi d'un signal de commande dédié.

4. Procédé selon la revendication 3, dans lequel ledit signal de commande dédié comprend l'identifiant de position de séquence de ladite unité de données délibérément abandonnée.

5. Procédé selon la revendication 4, dans lequel pour fournir une indication audit pair de destination, ladite procédure pour indiquer qu'une unité de données dudit protocole a été délibérément abandonnée comprend la génération dudit signal de commande dédié en modifiant l'unité de données délibérément abandonnée, en ce que une indication de rejet est ajoutée à l'unité de données délibérément abandonnée et une section de charge utile est supprimée de l'unité de données délibérément abandonnée.

6. Procédé selon la revendication 3 ou 4, dans lequel ledit signal de commande dédié est une unité de données de commande dédiée dudit protocole.

7. Procédé selon la revendication 1 ou 2, dans lequel pour fournir une indication audit pair de destination, ladite procédure pour indiquer qu'une unité de données dudit protocole a été délibérément abandonnée comprend l'ajout d'une information à une unité de données dudit protocole qui est envoyée après ladite unité de données délibérément abandonnée.

8. Procédé selon la revendication 1 ou 2, dans lequel ledit protocole fournit un troisième type d'information de réception (DPACK) indicatrice d'un abandon délibéré au niveau d'un pair relais dudit protocole, et où pour fournir une indication audit pair source, ladite procédure pour indiquer qu'une unité de données dudit protocole a été délibérément abandonnée comprend l'envoi dudit troisième type d'information de réception (DPACK) audit pair source.

9. Procédé selon la revendication 1 ou 2, dans lequel pour fournir une indication audit pair source, ladite procédure pour indiquer qu'une unité de données dudit protocole a été délibérément abandonnée comprend l'envoi dudit second type d'information de réception (ACK) audit pair source.

10. Produit de programme informatique comprenant un programme informatique pour exécuter le procédé d'une des revendications 1 à 9 lorsqu'il est chargé dans et exécuté sur un dispositif de relais d'unités de données programmable.

11. Dispositif de relais d'unités de données, comprenant :
un processeur pour implémenter un protocole de communication d'unités de données d'une couche prédéterminée, où les données à envoyer sont divisées dans ledit protocole en une séquence d'unités de données, chaque unité de données étant associée à un identifiant de position de séquence qui identifie une position dans ladite séquence, et ledit protocole assurant
- une communication desdites unités de données d'un pair source dudit protocole via au moins un pair relais dudit protocole vers un pair de destination dudit protocole,
- chaque pair relais et de destination dudit protocole étant agencé pour envoyer des messages de retour d'information transportant une information concernant une réception desdites unités de données dudit protocole, en utilisant lesdits identifiants de position de séquence, où ledit protocole fournit au moins un premier type et un second type d'information de réception, ledit premier type d'information de réception (RACK) étant indicatrice d'une réception correcte au niveau d'un pair relais dudit protocole, et ledit second type d'information de réception (ACK) étant indicatrice d'une réception correcte au niveau d'un pair de destination dudit protocole, et chaque pair source dudit protocole étant agencé afin d'effectuer une commande de retransmission pour lesdites unités de données sur la base de l'information de retour d'information reçue, où ledit protocole est implémenté de telle sorte que ledit dispositif de relais d'unités de données agisse comme un pair relais dudit protocole,
où ledit processeur est agencé afin d'abandonner délibérément des unités de données dudit protocole au niveau dudit dispositif de relais d'unités de données à une ou plusieurs conditions prédéterminées, et est en outre agencé afin d'indiquer audit pair source et audit pair de destination qu'une unité de données dudit protocole a été délibérément abandonnée, et pour identifier ladite unité de données délibérément abandonnée.

12. Dispositif de relais d'unités de données selon la revendication 11, dans lequel ledit processeur est agencé afin d'identifier une unité de données d'une couche supérieure à ladite couche prédéterminée à laquelle ladite unité de données délibérément abandonnée appartient, et afin d'abandonner d'autres unités de données dudit protocole qui appartiennent à ladite unité de données de couche supérieure identifiée.

13. Dispositif d'envoi d'unités de données, comprenant :
un processeur pour implémenter un protocole de communication d'unités de données d'une couche prédéterminée, où les données à envoyer sont divisées dans ledit protocole en une séquence d'unités de données, chaque unité de données étant associée à un identifiant de position de séquence qui identifie une position dans ladite séquence, et ledit protocole assurant
- une communication desdites unités de données d'un pair source dudit protocole via au moins un pair relais dudit protocole vers un pair de destination dudit protocole,
- chaque pair relais et de destination dudit protocole étant agencé afin d'envoyer des messages de retour d'information transportant une information concernant une réception desdites unités de données dudit protocole, en utilisant lesdits identifiants de position de séquence, où ledit protocole fournit au moins un premier type et un second type d'information de réception, ledit premier type d'information de réception (RACK) étant indicatrice d'une réception correcte au niveau d'un relais pair dudit protocole, et ledit second type d'information de réception (ACK) étant indicatrice d'une réception correcte au niveau d'un pair de destination dudit protocole, et chaque pair source dudit protocole étant agencé afin d'effectuer une commande de retransmission desdites unités de données sur la base d'une information de retour d'information reçue, où ledit protocole est implémenté de telle sorte que ledit dispositif d'envoi d'unités de données agisse comme un pair source dudit protocole,
ledit processeur étant agencé pour mettre en oeuvre une procédure de commande de retransmission pour commander une retransmission desdites unités de données dudit protocole sur la base de ladite information de retour d'information reçue, et pour recevoir une indication qu'une unité de données dudit protocole a été délibérément abandonnée au niveau d'un pair relais dudit protocole, et pour identifier ladite unité de données délibérément abandonnée,
où ledit processeur est agencé afin de mettre en oeuvre ladite procédure de commande de retransmission afin de réagir à ladite indication comme si ladite unité de données délibérément abandonnées avait été correctement reçue au niveau du pair de destination dudit protocole.

14. Dispositif d'envoi d'unité de données selon la revendication 13, où ledit processeur est agencé pour identifier une unité de données d'une couche supérieure à ladite couche prédéterminée à laquelle ladite unité de données délibérément abandonnée dudit protocole appartient, et pour abandonner d'autres unités de données dudit protocole qui appartiennent à ladite unité de données de couche supérieure identifiée.

15. Dispositif de réception d'unités de données, comprenant :
un processeur pour implémenter un protocole de communication d'unités de données d'une couche prédéterminée, où des données à envoyer sont divisées dans ledit protocole en une séquence d'unités de données, chaque unité de données étant associée à un identifiant de position de séquence qui identifie une position dans ladite séquence, et ledit protocole assurant
- une communication desdites unités de données d'un pair source dudit protocole via au moins un pair relais dudit protocole vers un pair de destination dudit protocole,
- chaque pair relais et de destination dudit protocole étant agencé afin d'envoyer des messages de retour d'information transportant une information concernant une réception desdites unités de données dudit protocole, en utilisant lesdits identifiants de position de séquence, où ledit protocole fournit au moins un premier type et un second type d'information de réception, ledit premier type d'information de réception (RACK) étant indicatrice d'une réception correcte au niveau d'un pair relais dudit protocole, et ledit second type d'information de réception (ACK) étant indicatrice d'une réception correcte au niveau d'un pair de destination dudit protocole, et chaque pair source dudit protocole étant agencé afin d'effectuer une commande de retransmission desdites unités de données sur la base de l'information de retour d'information reçue, où ledit protocole est implémenté de telle sorte que ledit dispositif de réception d'unités de données agisse comme un pair de destination dudit protocole,
ledit processeur étant agencé afin de mettre en oeuvre une procédure de commande pour commander une réception desdites unités de données dudit protocole et une réponse de réception,
ledit protocole étant en outre agencé afin de recevoir une indication de ce que une unité de données dudit protocole a été délibérément abandonnée au niveau d'un relais pair dudit protocole et afin d'identifier ladite unité de données délibérément abandonnée,
où ledit processeur est agencé afin de mettre en oeuvre ladite procédure de commande afin de réagir à ladite indication comme si ladite unité de données délibérément abandonnée avait été correctement reçue au niveau dudit dispositif de réception d'unités de données.

16. Dispositif de réception d'unités de données selon la revendication 15, où ledit processeur est agencé afin d'identifier une unité de données d'une couche supérieure à ladite couche prédéterminée à laquelle ladite unité de données délibérément abandonnée dudit protocole appartient et afin d'abandonner d'autres unités de données dudit protocole qui appartiennent à ladite unité de données de couche supérieure identifiée.
